# EUROPEAN PATENT APPLICATION

(11) **EP 0 718 061 A1**
(43) Date of publication of application: **26.06.1996**
(21) Application number: 95120433.8
(22) Date of filing: 22.12.1995
(51) Int. Cl.: B22F 9/14

(54) **Active metal powders**

(30) Priority: 23.12.1994 RU 94045005; 06.09.1995 RU 95114669; 10.11.1995 US 555768
(71) Applicant: Institute of Petroleum Chemistry, Russian Academy of Sciences, Tomsk 6034055 (RU)
(72) Inventor: Ivanov, Gennady V., 634055 Tomsk (RU)
(74) Representative: Müller-Boré & Partner Patentanwälte

(57) **Abstract**

Novel reactive metal powders are disclosed which are the product of the electro explosion of wires (11) composed of the desired metal elements such as aluminum in a non-oxidizing environment such as argon which are characterized by high intrinsic energy and submicron particle size.

## Description

Active metal powders are disclosed which are prepared by the electroexplosion of metal wires in non-oxidizing environments and then preferably activated by treatment in organic liquid. The novel powders are characterized by their inherent high energy content and extraordinary surface area which provides improved reactivity. The activated metal powders can be used in the direct synthesis of inorganic compounds and metal alloys. Additionally, electroexploded metals such as tin and copper can be chemically bonded or "etched" onto non-conductive materials to provide conductive paths.

The invention relates to a new class of metal powders and in particular to a class of active metal powders prepared by the electroexplosion of at least one wire comprising the metal of the desired metal in a substantial inert environment which are then preferably activated by treatment in organic liquid.

The process of electroexploding wire has been generally known and was mentioned inliterature as early as 1777. Normally, when a high electric power impulse is applied to a metalwire, the wire can achieve a temperature of 20,000°C or greater. At such temperatures, the wire explodes into a very fine form of metal that has been described as light, fluffy sub-micron particles.

It was reported (G.V. Ivanov, N.A. Yavorovsky, U.A. Kotov, V.I. Davidovich, G.A.Melnikova,∼"Self-propagating Process of Sintering Ultradispersive Metallic Powders," Reports Academy of Science, 1984, Volume 4, pp. 873-875.) that a form of internal energy was inherent in the metallic product prepared by exploding copper or aluminum wire by the application of a very high electrical energy pulse to such wire in an argon gas environment. This internal energy was detected when the powder so produced from either the copper or the aluminum wire consolidated into a pellet which heated to approximately 400°C. At that point it was observed that the pellet would exotherm such that the metal would self sinter. This was confirmed in a publication by N.A. Yavorovsky et al. (N.A. Yavorovsky, A.P.Il'in, V.I. Davidovich, M.I.Lemer, L.T. Proskoorovskaya, "Phenomena of Heat Explosions at High Dispersive Powders of Pure Metals, "Proc. of First All-Union Symposium on Microscopic Kinetics and Chemical Gas Dynamics, October 1984, Volume 1, published by Chemogolovka, 1984, pp. 55-56.) who noticed the effect with silver and nickel as well as the aluminum and copper. However, therehas been no further published information on the source or nature of this energy. Moreover, there has been no reported use of electroexploded wire powders or the self-heating phenomena.

Accordingly, it is an object of this invention to provide novel powders prepared by electroexplosion and activated by treatment in organic liquid which have unusual chemical properties. It is another object of the invention to provide active powders that have unique physical and chemical characteristics that may be associated with unexplained internal energy.

It is a further object of the invention to provide powders that are activated with respect to chemical and metallurgical processes to accelerate reactions in which they are associated.

Generally, the present invention comprises a metal powder prepared by the electroexplosion of a metal wire in hydrogen or inert gas which may be further activated by treatment in organic liquid such as toluene, hexane or the like and characterized by the small particulate size of the powder and its high intrinsic internal heat.

One use of the invention is to synthesize inorganic compounds at low temperature directly from their elemental form. For instance, many compounds of metals and nonmetals are difficult to form directly from their constituent elements because the nonmetal is generally too volatile. Moreover, high pressures and temperatures are necessary to achieve rapid reaction. Other synthesis may be inhibited because the kinetics of the direct reaction is slow; for example, the direct reaction of aluminum with nitrogen to form aluminum nitride. Another example is the direct synthesis of aluminum diboride directly from the constituent elements.

Synthesis of intermetallic alloys by powder metallurgical processes often requires high temperatures and long reaction times. In one embodiment of the invention, the active metal powders can take advantage of their high intrinsic heat to achieve melting of joining alloys using their internal heat rather than melting through alloying. Melting achieved locally is of significant benefit in joining temperature sensitive materials. Also, the use of lead free tin can be achieved by the use of tin powders of the present invention rather than lead-tin solder, thus alleviating the environmental concern of the use of lead.

In another embodiment of the invention the powders are used for the purposes of chemical bonding metals to substrates such as glass, ceramics and plastics. It has been found that these self heating powders can chemically etch glasses, ceramics and other nonmetal substrates, such that it is possible to apply metallic conductors in patterns of very narrow width for the purposes of shrinking the area of microelectronics, or to apply as decorative metal bonded to the nonmetallic substrate or as a means of plating metals on temperature sensitive materials such as glass without the use of electrolytic deposition which itself has adverse environmental consequences.

The reactive character of the exploded powders, and its additional property of self sintering makes powders of the invention suitable as a means for the manufacture of glass or ceramic-to-metal feed-throughs. This allows the use of certain metals in bonding or sealing without taking the glass or ceramic parts to temperatures that are currently necessary with existing powders.

In yet another embodiment, aluminum powder of the present invention can be used in pyrotechnics and other metal fuel/inorganic oxidizer mixtures. Normal aluminum powder along with solid oxidizers is often used as a fuel or ingredient thereof. Burning rate, uniformity of burning and energy content are key measures of the resultant mixtures. However, the burning rate of normal aluminum powders is often too slow to widen the applicable use of these powders in propellants. The aluminum powder of the present invention increases the burning rate of propellants without being pyrophoric and too dangerous to handle, yet retaining much of its oxidizable energy content. Also, when aluminum powders of the invention are used as additives or fuels in propellant mixture, they burn efficiently and quickly, avoiding the problems associated with inefficient or slow burns causing particles to be incompletely oxidized in the throat of a rocket nozzle, thus, wasting propulsion energy. Not only is there energy loss when the conventional aluminum particles are burned outside of the throat of the rocket nozzle, such particles enhance radiation of the plume enabling the rocket to be more readily detected by infra-red detectors. Exact analysis of the novel material has been difficult because under even low power electron beam microscope, the physical properties are changed. Additionally, there is evidence that many of these powders include inert gas in which they are exploded. Thermogrametric analysis (TGA) has been used to demonstrate compounds or mixtures of argon, helium, xenon, and metals such as sodium, potassium, copper, silver, aluminum, indium, titanium, zirconium, tantalum, molybdenum, and iron. These materials are very highly reactive. Other advantages of the present invention will become apparent from the following detailed description of the invention taken in connection with the accompanying drawings.
Figure 1 is a diagrammatic view of the apparatus used to produce and collect the novel metal powders of the present invention;
Figure 2 is a diagrammatic view of an apparatus for continuously feeding fine diameter wire to produce the powders of the present invention;
Figure 3 is a diagrammatic view of an alternative apparatus in which the electroexplosion occurs in a liquid inert environment;
Figure 4 is a TGA of aluminum powder of the invention;
Figure 5 is a TGA of aluminum powder activated in hexane;
Figure 6 is a TGA of aluminum powder activated in toluene;
Figure 7 is a TGA of aluminum powder activated in helium;
Figure 8 is a TGA of aluminum powder activated in toluene;
Figure 9 is a TGA showing the heat effects of self∼©sintering of aluminum powder prepared in argon;
Figure 10 is a TGA of aluminum powder activated in toluene;

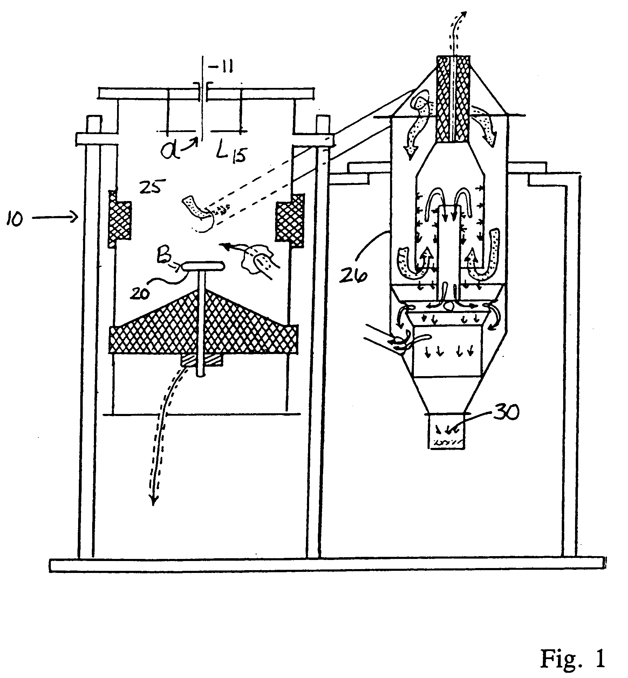

Figure 1 1 is a TGA of aluminum powder prepared in liquid argon;

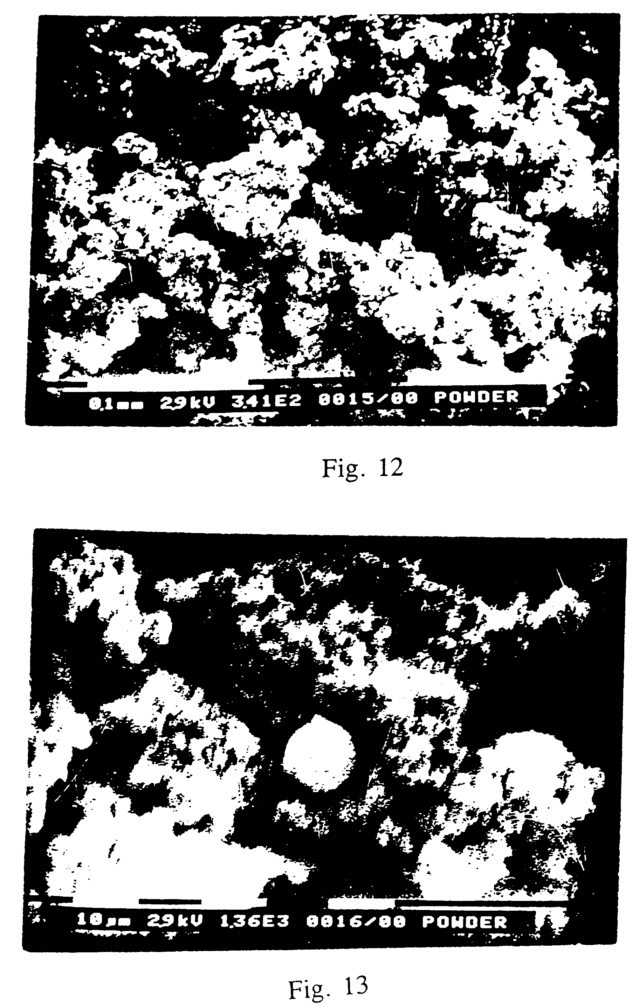

Figures 12 and 13 are photomicrographs taken using a scanning electron microscope showing the change in structure due to the effects of the electron beam of the microscope;

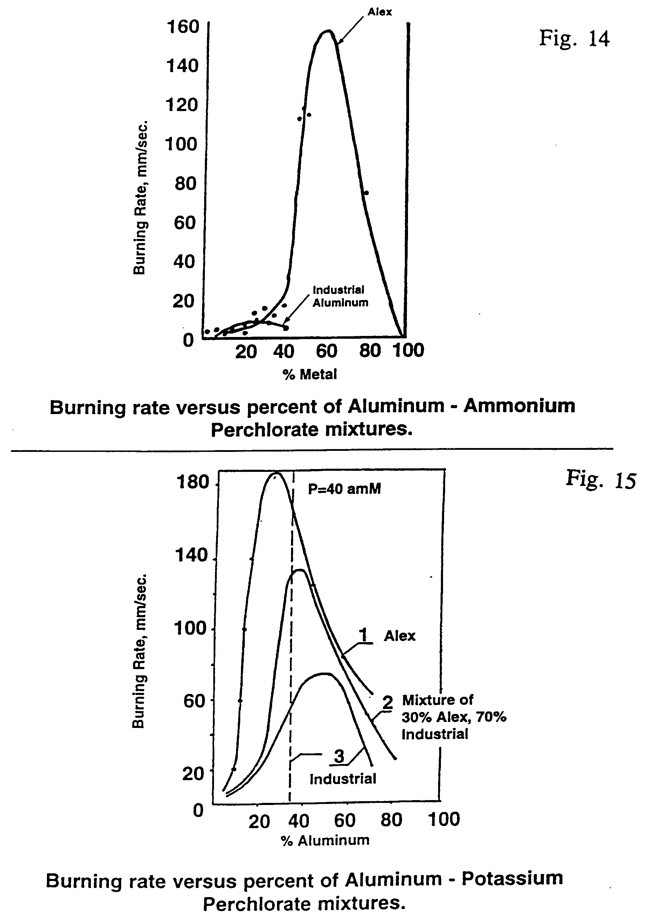

Figure 14 is a graphical representation of the comparative burning rates of aluminum perchlorate mixtures made with conventional aluminum and that of the present invention;
Figure 15 is a graphical representation of the comparative burning rate of aluminum potassium perchlorate mixtures made with conventional aluminum and that of the present invention;

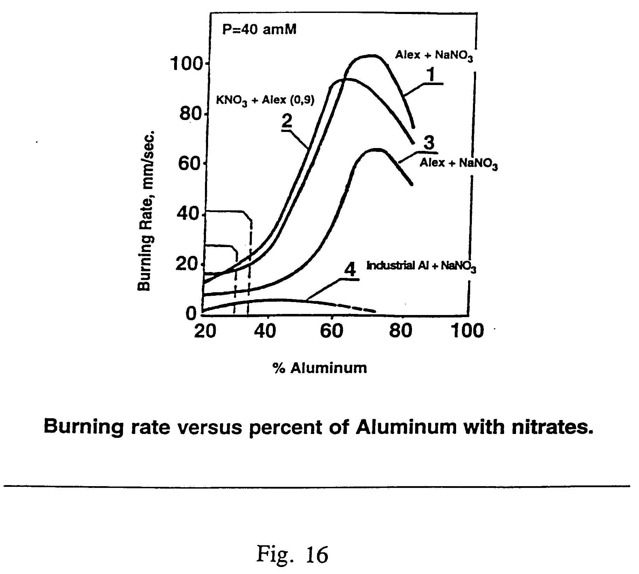

Figure 16 is a graphical representation of the comparative burning rate of sodium and potassium nitrate with conventional aluminum and that of the present invention;

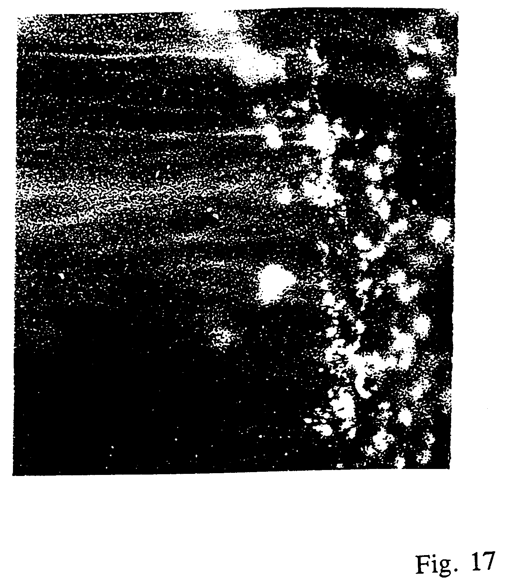

Figure 17 is a photograph showing microcinema of the surface of a burning mixture ofaluminum perchlorate with aluminum of the present invention.

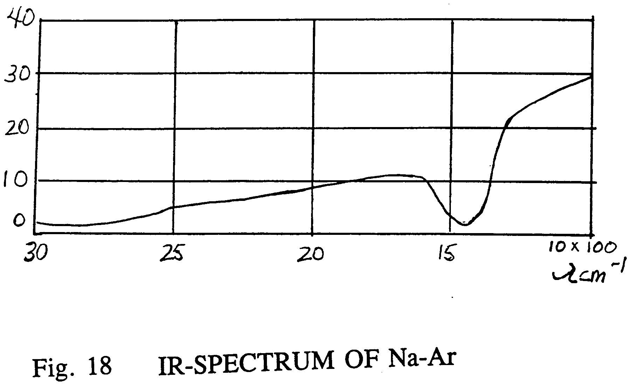

Figure 18 is an infra-red spectrum of sodium-argon.

The active metal powders of the present invention are prepared by electroexplosion of metal wires in hydrogen or inert gases or liquids. These powders have new and unusual chemical properties as well as physical properties that enhance their abilities to react. These properties result, in part, from the very small particle size of the powder, their intrinsic internal energy and their unusual combustion characteristics. In some cases it is believed that these powders form compositions or mixtures with the inert compounds in which they are reacted.

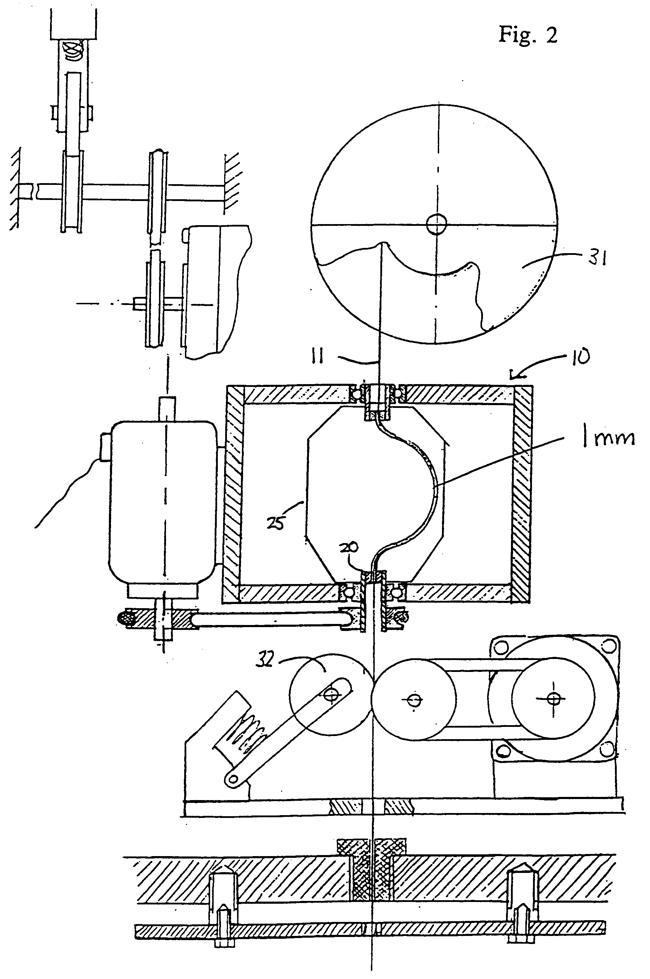

Referring to Figure 1, a device 10 is shown which is useful in the production of the powders by explosion of a wire 11 in an inert gas or hydrogen and placed into a device for holding organic liquid. The device takes advantage of the teachings of N. A. Yavorovky (U.A.Kotov, N. A. Yavorovsky, "Research of Particles Produced by Electroexplosion of Conductors, " Physics and Chemistry of Treatment of Materials, 1978, Volume 4, p. 24-28). A wire 11 of the desired metal composition preferably having a diameter of from 0.1 to 1.5mm and more preferably about 0. 3 mm in diameter is used. The length of wire 11 can range from about 50∼500mm long, but is preferably about 300 mm long. The wires can be hand fed or fed from the bobbins 31 continuously through the connectors 'a' and 'b' by the apparatus 32 (Fig. 2). This apparatus allows the soft metals such as aluminum, copper or silver to be fed through connectors in the form of a direct line, such as elastic wire, tungsten, molybdenum, and iron. This is accomplished by twisting the wire to harden it by rotating 25. Wire 11 is positioned between electrodes 15 and 20 within chamber 25. Hydrogen may be used within the chamber, but inert gases such as helium and argon are preferable. The gas pressure in chamber 25 is kept at approximately one to six atmospheres.

The preferred power to the wire is more than the latent heat of vaporization for that mass of wire being electroexploded and preferably 1000-2000J. The latent heat of vaporization is different for different metals. Also, it is preferred to achieve the highest power attainable for the shortest time so as to achieve temperatures of about 20,000K, while maintaining a high electromagnetic field to constrain the fluidized metal. For the above wire size and power, one microsecond is preferred.

After the wires are exploded as described hereafter, the resulting powders are collectedby a variety of means 26, including an internal electrofilter (as shown), or a centrifugal separator. Preferably the powders are settled in a bath 30 of inert organic fluid of relatively low vapor pressure. The use of a liquid organic such as toluene or hexane in collecting the powders offers the advantage of minimizing the contamination of the powder to atmospheric gases upon removal from the chamber. The use of the liquid organic also appears to alter the structure of the powders making them significantly more reactive than the powders of the prior art.

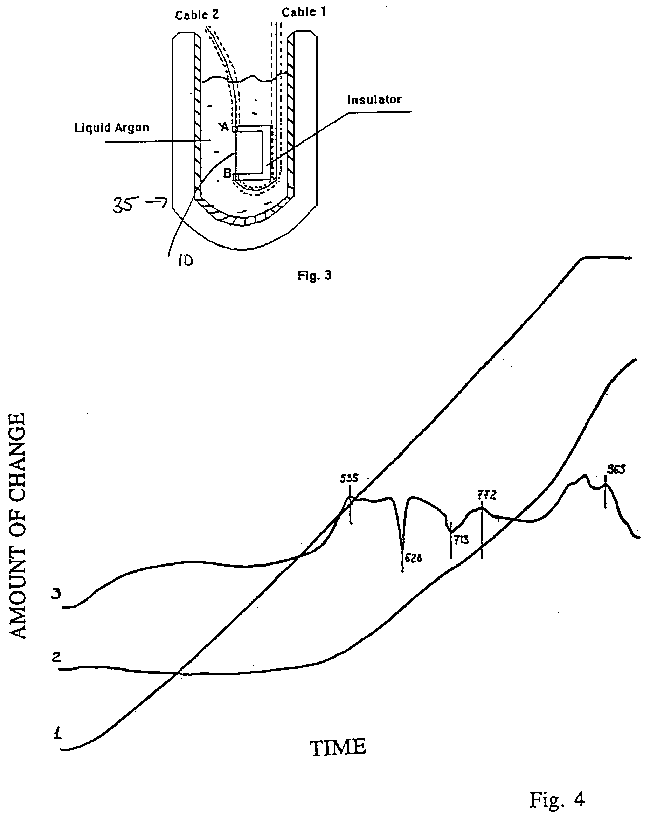

In another preferred embodiment shown in Fig. 3, device 35 is designed to explode wires 10 in cryogenic liquefied inert elements. It has been discovered that when wires 10 are exploded in cryogenic inert fluids, the resulting powder has an even greater internal heat content than when the powder is made in 4-6 atmospheres of inert gas. Moreover, the heat content is 100 times greater than wires exploded in gas. Device 35 has an inner chamber for explosion of the wire while immersed in liquid inert elements, and there is a vacuum between it and the outer chamber to reduce the loss of the cryogenic 'reactant'. In this case the wall of the inner chamber is preferably much thicker for strengthening than in the case where wires are exploded in inert gases. Also, the feed-throughs connecting holders a and b are electrodes for the wire. The current embodiment with liquid argon uses pulses of 100-400J; however, higher energy pulse can be achieved by optimizing the design of the vessel to withstand the attendant increasing energy levels of the shock waves through the liquid media. After the explosion of several lengths of wire, the argon, containing the powdery product, is decanted and the cryogenic is allowed to evaporate to permit collection of the powder. It is possible to modify this apparatus shown in Figure 3 so that the cryogenic fluid is conserved by forcing it through a filter into a reservoir after a substantial number of wire lengths are exploded. The residual liquid is allowed to evaporate and the powder product collected. Also, it is possible to recover and recycle the cryogenic reactant.

A composition of matter according to the present invention comprises a reactive metal powder as prepared according to the method of the present invention and an inert element, preferably argon, xenon or helium. Preferably, the composition of matter consists of a reactive metal powder as prepared according to the method of the present invention and an inert element such as argon, xenon or helium. In a preferred embodiment, the metal is an alkali metal. It is further preferred that the alkali metal be sodium and the inert element be argon or helium. In another preferred embodiment, the metal is one selected from a group consisting of transition metals, Group 4B metals, Group 5B metals, Group 6B metals and Group 8B transition metals. In yet another preferred embodiment, the metal is a transition metal, a Group 3A metal or a Group 4B metal and the inert element is argon.

In addition to the novel active aluminum powders, active metal powders of iron, nickel, tantalum, tin, copper, and molybdenum have been prepared by electroexplosion. The following examples are illustrative of the active metal powders of the present invention and their use.

Example 1: 100 mgms of aluminum powder received by electroexplosion of wires in ahydrogen atmosphere (approximately 6 atmospheres) was put in a platinum vessel and heated inair in a device for thermogrametric analysis (TGA) to 1000°C. Fig 4, Curve 1 is temperature and Curve 2 is weight change, and we see a rise of weight,due to the oxidation of powder, starting at a temperature of approximately 525-530°C. (Curve 2). But self-heating occurs earlier at 400°C (Curve 3, differential temp) which is the process of self-sintering and the endotherm at 628°C is the melting of the sintered aluminum. The exotherm at 772°C and 80°C is heat of oxidation. By analysis of this sample after cooling in a microscope, bright balls and a small quantity of white powders that are oxides can be observed. In agreement with this observation is a chemical analysis showing the percentage of oxidation to be about 20%.

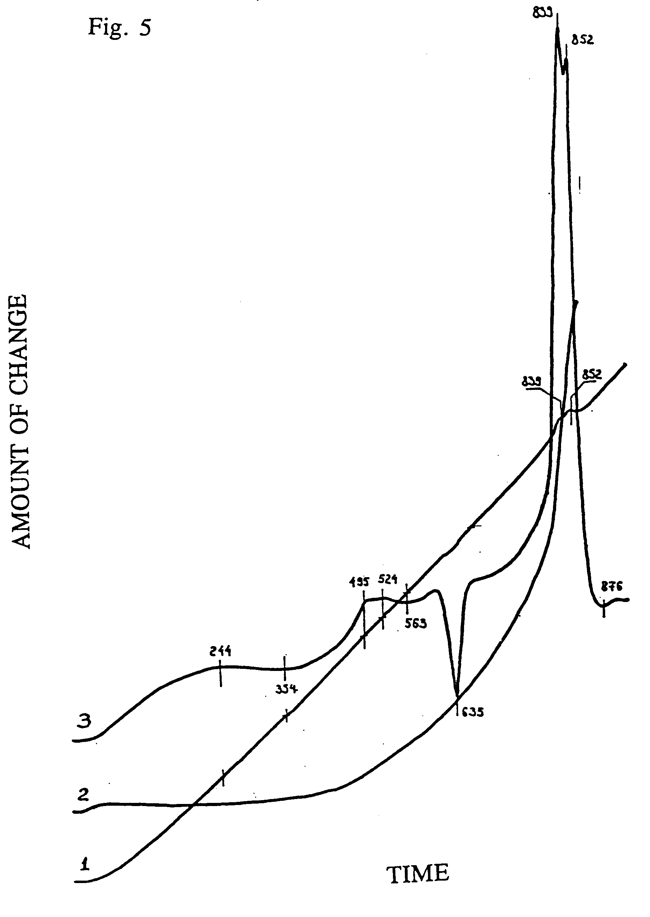

Example 2: 1 or 2 grams of aluminum powder prepared as in Example 1 was put in small glass vessel with hexane liquid. It was kept 5 hours at room temperature, then hexane was decanted and powder allowed to dry in vacuum. 100 mgms of dry powders were heated to 1000°C in air as in Example 1. Fig. 5, Curve 2 shows that oxidation starts at temperatures near 400°C, but self heating occurs at temperatures near 350°C. After melting there is a very sharp exotherm (Fig 5, Curve 3). The product under the microscope shows that the sample is up to 90% white high dispersive oxide powder.

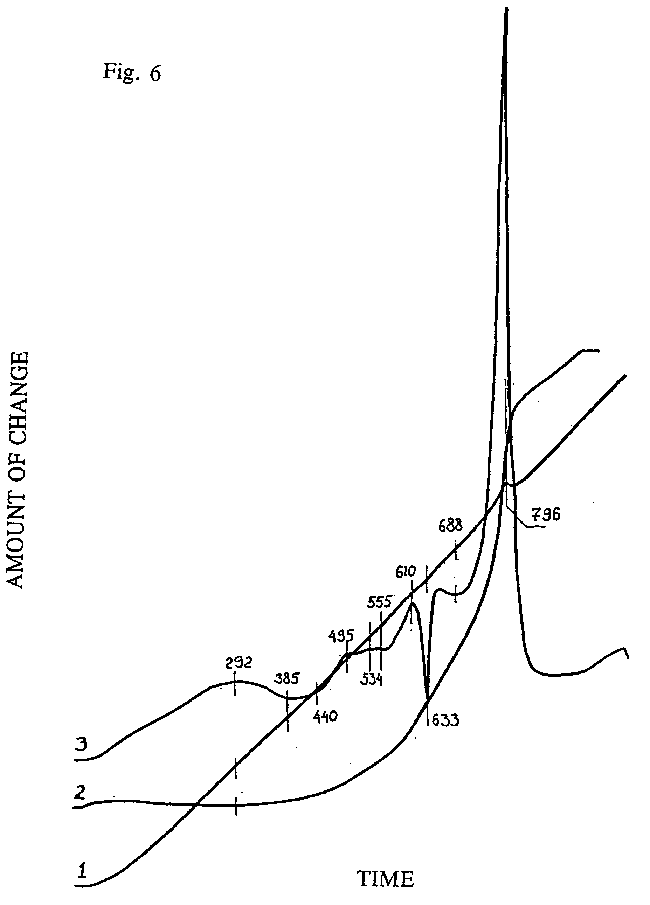

Example 3: As in Example 2, the experiment was repeated with another organic liquid, toluene. The results are seen in Fig. 6 which show that treatment of aluminum powder by toluene gives analogous results. There are small differences in the loss of weight of the sample, which with hexane (Example 2) was 0 08 and with toluene was 0.8. This small difference may be connected to desorption of organic liquid with higher volatility.

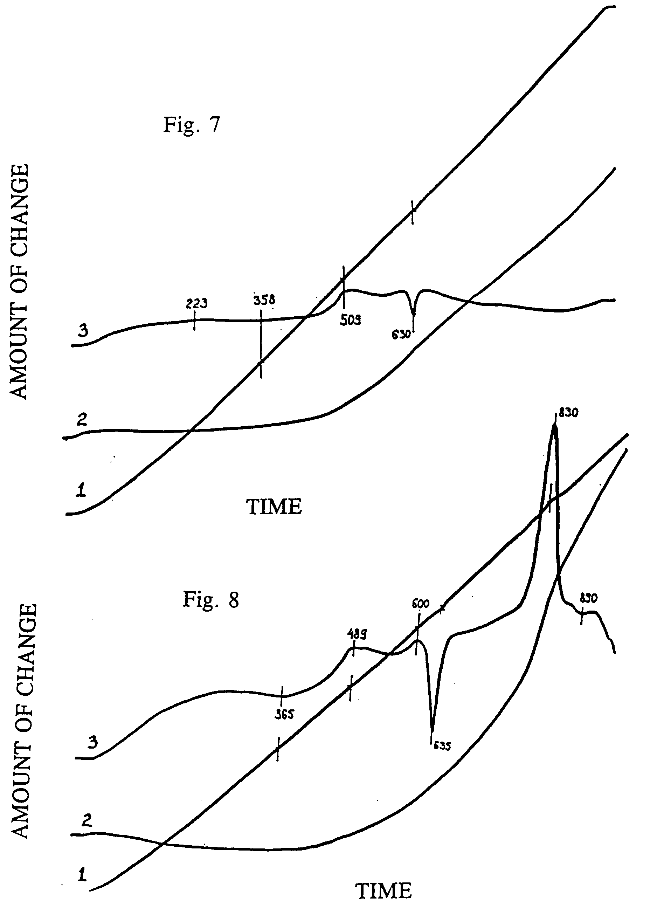

Example 4: 100 mgms of aluminum powder made by electroexplosion of wire in a helium atmosphere was put in a platinum vessel and the same experiment was repeated as in Example 1. Fig. 7 shows the total heat effects which are lower than in the case of Example, 1.

Example 5: Aluminum powder prepared by electroexplosion of wires in helium atmosphere was put in a glass vessel with toluene and kept 24 hours. The liquid was then decanted. The powder was dried in vacuum. 100 mgms of the dried powder was heated up to 1000°C as in Example 4. Fig 8 shows that treatment by toluene provides an increase in all heat effects.

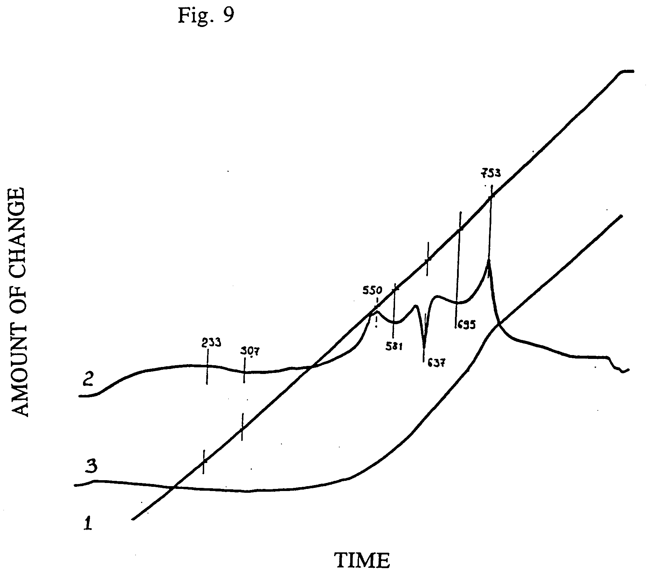

Example 6: 5 mgms of aluminum powder prepared by electroexplosion of aluminum wires in a argon atmosphere was heated in air up to 1000°C such as in Examples 1 and 4. Fig. 9 shows heat effects of self sintering and oxidation that was more rigorous than powders prepared in either hydrogen or helium.

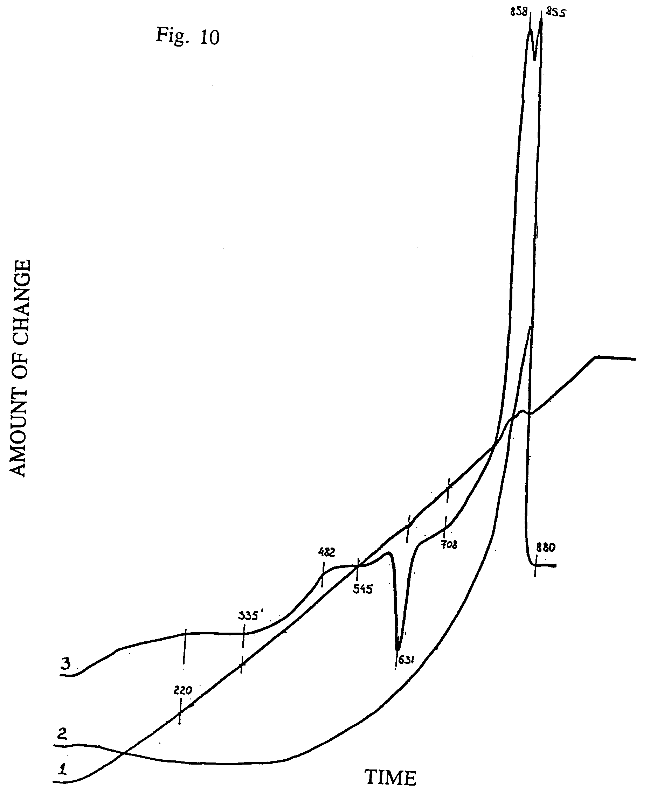

Example 7: Aluminum powder made by electroexplosion in an argon atmosphere was placed for 20 hours in toluene. The toluene was decanted and the powder was dried in vacuum. 100 mgs of the dried powders were heated up to 100°C in air such as in Example 6. Fig. 10 shows TGA data, and a dramatic increase of all heat effects can be seen.

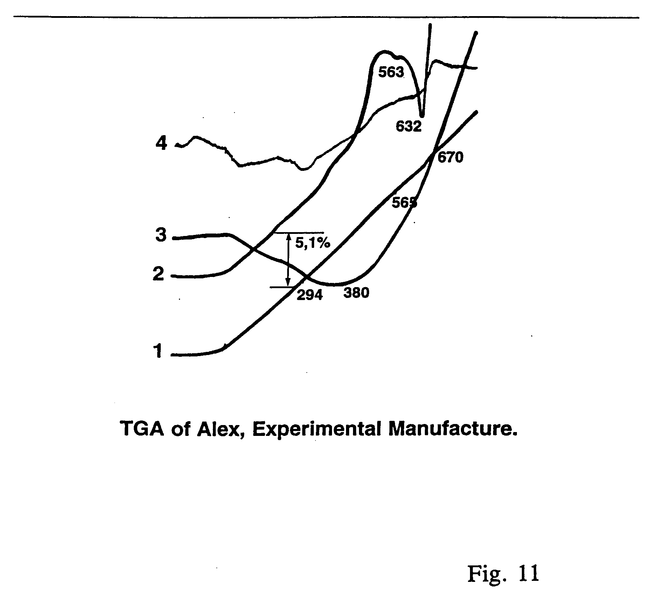

Example 8: Using the dual walled device as shown in Fig 3, aluminum wires (0.3 mm diameter and 100 mm long) were exploded in liquid argon at a power setting of 400J for 1-2 microseconds, and the process was repeated 100 times. The product consisting of 3 liters of blackened liquid argon was brought to a glove box using glass vessels, and the argon was allowed to evaporate. Powder was also removed from the device's walls and bottom. The resulting powder was characterized by TGA (Fig 11). Note the continuous loss of weight on heating from room temperature through 380°C, amounting to 5.1%, and the simultaneous heat release. After 380°C there was an acceleration of heat generation and a rapid weight gain followed by oxidation. When comparing this sample to Fig. 4 of Example 1, a greater heat generation is seen which is typical of what is seen with samples prepared in liquid inert gas rather than gaseous preparation. Note also the endotherm at 632°C, which corresponds to the melting of aluminum. This melting point, considerably below that of bulk aluminum (660°C) is expected for particles in the nanometer size range.

Example 9: 0.5 grams of activated aluminum was put in a vessel of a standard calorimetric device for measurements of heat for burning different powders in oxygen but the device had nitrogen instead at a pressure of near 40 atmospheres. After ignition by an electric heated wire, the device shows fast processes. When the device was opened, white powder was seen in the vessel. Chemical and x-ray analysis shows that this is pure aluminum nitride. Thus, it is possible to react activated aluminum powder with nitrogen in the form of 'burning' with nearly 100% production output of aluminum nitride. Typical industrial aluminum powders must be heated in a nitrogen atmosphere for many hours at temperatures of approximately 1000°C inorder to convert it to the nitride. This is in agreement with G. V. Samsononv, "Nitrides, "Kiev, Naookora Dumka, 1966.

Example 10: 2.7 g of activated aluminum was mixed with 2 grams of boron. A pressed pellet was made from this mixture of 10 mm diameter and 10 mm high, and it was put in the chamber with argon at one atmosphere and was ignited by electric wires. The reaction occurs with the production of a bright light. After cooling, the material of the pellet was analyzed by chemical and x-ray analysis which shows that the product is aluminum diboride. For its synthesis in industry as in Example 4, it needs long heating of the mixture at 800∼900°C. (G. V.Samsonov, T.I. Serebriakova, V.A. Neronov, "Borides," Moscow, published by Atomeezdat,1975, p. 309.)

Example 11: Tin powder made by electroexplosion in argon was activated in toluene for 6 hours and dried. Approximately 10-20 mgms were put in a small glass vessel and was heated. Between 170°C and 215°C the melting of the powder and spreading of the liquid tin on the glass is observed. After cooling, a film of metallic tin was on the surface of the glass which wasimpossible to separate therefrom with a knife.

Example 12: Activated copper powder was put in a vessel with water and 0.5-1 % of water soluble polymer, and a suspension of the mixture was obtained. This was painted on the surface of plastic and a metallic stencil with temperatures of 450-500°C was pressed onto the plastic for 1-2 seconds. After removing the stencil, a metallic pattern was formed on the plastic in the shape of the stencil. The activated copper on the unheated portions of the plate was washed with water and was collected for recycling. Using activated copper powder permits the production of copper coatings without photolithography. Good results were also obtained by placing metallic patterns of copper, aluminum and nickel on the surface of glass and porcelain using a laser beam as a heat source.

Example 13: A sample of exploded copper made according to Example 1 was mixed with commercial zinc in the ratio 70% Cu - 30% Zn and cold-pressed into a pellet, approximately 1 cm diameter and 1 mm thick. The pellet was heated on a hot plate to approximately 200°C, and exothermed with red radiation, and after cooling had the color of brass. The experiment was repeated with the addition of 5% exploded aluminum to the 70-30 mix and it was found by looking at the pellet that the alloying was even more effective. It has been generally experienced that the resulting pellets, after exotherming had a void volume of 20%, which is typical of pellets similarly made from small particulates, except in the case of powders of the invention alloyed at much lower initial temperatures.

Example 14: A pellet of copper powder of the present invention was prepared and placed in the bottom of a glass vacuum chamber to serve as an anode. Between an electron cathode, consisting of a thin tungsten wire and the copper anode, a metal wire grid was inserted. The pellet was bombarded by electrons (at milliampere levels) which were accelerated by a 10 kV potential maintained on the grid. This energetic beam was enough to activate the process of sintering.

Example 15: A copper powder of the invention was examined under an electron microscope to determine its structure. When observed in a scanning electron, the structure was that of a sponge. But in the transmission electron microscope, after a few seconds of observation, it was noticed that the material changed from a spongy structure to round balls. Figure 12 shows the material at the very beginning of observation, and Figure 13 shows the material after about one or two seconds of exposure. Note the formation of a droplet was observed several times with copper powder, particularly on viewing through a transmission electron microscope. This was also observed in a scanning electron microscope where there is lower energy, and while the formation of balls was noted, it was not as clearly defined. It is believed that the energy from the electron gun activated the powders to cause them to coagulateand melt. The experiment was repeated, except that a previously cooled massive metallic base was used onto which the sample was mounted, and the coagulation was minimized. Clearly, the powder is sensitive to electron bombardment during observation. It is also believed that previous observation by other researchers who characterized exploded metal powder structure as metallic balls might have seen the effect of electron microscopic examination on activating the powder.

Example 16: A sample of electroexploded tantalum was cold pressed, followed by cold pressing exploded copper onto the tantalum pellet. The bimetallic compact was heated in vacuum to 100°C. The resulting pellet was clearly bimetallic with a copper face and a tantalum face and the two could not be separated by any means.

Example 17: A sheet of austenitic stainless steel had placed thereon an.Al pellet of the present invention. The stainless steel plate was heated on the bottom side to about 400°C and the AI pellet exothermed. At the end of the experiment it was observed that the aluminum pelletwas tightly bonded to the stainless steel and could not be removed without the destruction of the aluminum.

Example 18: Two stainless steel plates, each about 1 cm square and about 3 mm thickness, were turned into a composite with a film of aluminum powder between them. The composite was heated in a furnace to about 450°C, and removed. The two stainless plates were bonded together.

Example 19: Aluminum made as in Example 1 was mixed into several formulations with ammonium perchlorate. Figure 14 shows the burning rate versus percentage compositionof aluminum/ ammonium perchlorate mixtures, comparing fine industrial aluminum powder versus the wire powder of the present invention. The remarkable difference in burning rates wasabout 20 times as compared to 'industrial' powder, while mixtures of 40% industrial aluminumwould not burn at all, whereas mixtures with exploded aluminum burned with high velocity in mixtures containing 42 to 95 % aluminum.

Example 20: A mixture of aluminum powder as made by the method of Example 1 was mixed with potassium perchlorate (see Fig. 15). There was a sharp dependence of burning velocity with composition change where the burning velocity rose very quickly at 5 to 15% metal content and reached a maximum velocity of 180 mm/sec at metal contents near stoichiometry. Mixing 30% of the exploded aluminum with ordinary aluminum demonstrated that the more active exploded aluminum could serve as a good activator for the burning of the mixture.

Example 21: Aluminum made by the method of Example 1 was mixed with sodium and potassium nitrate as oxidizers. (See Fig. 16) The velocity of burning was 10 times higher than analogous mixtures with industrial aluminum but its maximum is shifted at compositions greater than stoichiometric.

Example 22: It is generally known that when samples of propellants burn while standing on massive metallic blocks, there is not full combustion due to heat conduction onto the sub-cooled metal surface. When ammonium perchlorate-binder mixtures made with industrial aluminum were burned, a 0.5 to 1 mm thick layer of metal droplets and carbonized binder were on the metal plate as an ash, while the aluminum of the present invention did not produce any discernable residue.

A mixture of exploded aluminum made by the method of Example 1, where the composition was exploded aluminum (20%), ammonium perchlorate (60%) and epoxy resinbinder (20%). It was found that this mixture could maintain combustion at liquid nitrogen temperatures, a phenomenon not known with any propellant mixture.

Example 23: A mixture of exploded aluminum made by the method of Example 1 where the composition was exploded aluminum (20%), ammonium perchlorate (60 %) and epoxy resinbinder (20%). It is known that on the burning surface of a charge of propellant, the particles of aluminum melt and agglomerate to form large droplets which have no time to fully oxidize within the throat of the engine. There are two modes of energy loss due to incomplete combustion the loss of heat and a reduction in gas velocity caused by the presence of the large heavy particles. Photograph (Fig. 17) shows a microcinema of the surface of the burning mixture of ammonium perchlorate/exploded aluminum and binder. This figure shows that the metal burns mainly at the solid gas interface, and the oxide particles that are formed are very small and highly dispersed.

Freshly extruded wires of alkali metals, sodium and potassium, have been exploded in the gaseous argon. The resulting product is believed to contain 50% by weight argon with sodium and 64% by weight with potassium. Also prepared were mixtures of sodium and helium, where the apparent weight content of helium was 25.4% which closely corresponds to a composition of NaHe₂.

Wires of copper, silver, aluminum and titanium have also been exploded in the gaseous argon and are believed to have argon content of 0.02%. However, if the wires of copper are exploded in the liquid argon, there appears to be dramatic increase in the apparent argon content equal to 6.6%. This is also the case when aluminum and titanium are exploded in the liquid argon; higher argon content products are formed. With aluminum wire (diameter = 0.3mm) and 200J of power applied, the product content went to about 3% by weight argon. When higher power levels (400J) were used the argon content was about 5.1 %. With titanium, under the same conditions, the argon content of the product was 3.8 %. Wires made from the metal series of the periodic group including tantalum, tungsten, nickel and iron have been exploded in the gaseous argon and the argon content in the resulting powders was approximately 0.02 %,generally ranging from 0.015% up to 0.05%.

The metal, argon has variable compositions which depend to some degree upon the method of preparation, e.g., the greater the energy applied to the wire or the higher the concentration of argon in the region of the wire explosion (as in the case of the liquid argon) the higher the argon content in the final product. Therefore, it is possible to produce stoichiometric compounds of argon or helium and alkali metals, while in the case of other metals under the conditions of the experiments the conversion was incomplete and the product consisted of two or more phases of metal and the inert gas compound.

Example 24: Using the device similar to that shown in Fig. 1, the sodium wires with the diameter of approximately 0.8mm and 100mm long were formed by an extrusion device above the chamber, and sodium was extruded through a die rather than the reel depicted in Fig1. The wire was exploded in the presence of argon under a pressure of 4 atmospheres. A power surge of 1000J was released from the bank of capacitors with the voltage of 20,000volts and applied for the period of 1.0-5.0 microseconds. The chamber was not opened until 100 lengths of the sodium wires were electroexploded and the accumulated product removed from the chamber. The resulting product was a very light (the density was less than 0.05 gram per cubic centimeter) white grey powder. The argon content as determined by weight loss was approximately 30%.

The product underwent neutron activation analysis, and the argon content was estimated to be between 20 and 30%. Surprisingly, on a repeat testing of the same sample the second day, it yielded only 15 % argon, and on the third day the argon content was only 7%. It appears that neutrons destroy the compound. It was noted that during x-ray radiation during diffraction analysis the compound would also dissociate.

The powder underwent mass spectrometry analysis, and upon decomposition in vacuum, the argon output increased dramatically up to 250°C and then declined at higher temperatures. Fig. 18 shows the infrared spectrometry results of the powder. Note the large absorption band near 1500cm⁻¹, which is not typical for known sodium compounds. Also absent is the absorption band for water, which is usually detected with sodium, even under dry organic compounds. The water reaction with the new compound is immediate; that is, the reaction of the powder directly with liquid water results in a very fast reaction with frothing and the dramatic release of gases.

When heated in air under a hot stage microscope, it was observed that the original white grey powder melted to form a colorless liquid at 59-60°C, and after reaching about 187°C, there was considerable frothing as gas evolved as the liquid turned black, ostensibly because the sodium formed as microparticulates. With further heating, shiny metallic looking balls appeared and the liquid turned clear again as the temperature rose toward 60°C and with still further heating the substance became a white solid, presumably sodium oxide. This solid reacted with water to form a highly caustic solution.

Example 25: Example 24 was repeated with sodium wire exploded in 4 atmospheres of helium. The TGA of the resulting material showed that the total weight loss was 24.5%,corresponding to an empirical formula of NaHe₂. Also, note that two endotherms at about 60°C and at the latter temperature there was very rapid weight loss of about 7 % within 2-4 minutes. The weight loss continued up until 770°C. Also there was continuous heat given off in between 280°C and 530°C.
Under a hot stage microscope, the process is similar to that of sodium argon, that is, a transformation of the white grey powder into a transparent colorless liquid at about 60°C, upon further heating to 198°C it froths while the transparent liquid turned black, with subsequent coalescence to form metallic looking balls upon further heating, and finally oxidation with the generation of heat up to 530°C.

Example 26: Example 24 was repeated with potassium wire and argon at 4 atmospheres. The TGA of the resulting product showed that the total weight loss was 64.4%. Also noted was an endotherm at about 38°C without melting, melting at 160°C and exotherms at 274°C, 318°C,400°C, 502°C, 670°C and 874°C. An infrared spectrum of this compound showed a large absorption band, similar to sodium argon, but at a maximum of 1450 cm⁻¹, and the absence of water molecules. When reacted with liquid water, it was much more reactive than was the case with the sodium compound and was accompanied by sparks.

Example 27: Titanium wires were exploded in argon gas at 250J for 3-5 microseconds. The TGA shows a gradual heat evolution from 80°C to approximately 400°C without any weight change and the beginning of oxidation at 483°C. Under a hot stage microscope, agglomeration of the powder between 300-400° was noted with approximately 90% of the metal converted to oxide.

Example 28: Tantalum wires were exploded in argon gas as in Example 27. The TGA of the resulting product shows there is gradual heat generation from about 150°C to 450°C and a concomitant small weight loss. The first stage of oxidation starts to occur at about 478°C, then oxidation accelerates, and is very rapid at about 770°C. There did not seem to be the same type of agglomeration of tantalum as with other metals. The argon content of this sample was 0.018%, and there are two steps in its evolution.

Example 29: Iron wires were exploded in argon gas under the same conditions as the previous example. From the TGA there is very rapid oxidation at 200°C and then again at 450°C. The resulting powder did not show any sign of metal. However, when TGA is done under argon, there is a very rapid heat release up to 200°C without any noticeable change in weight, and then there is a fast weight loss amounting to about 4.5 % mostly associated with the generation of heat at about 600°C. The resulting powder consists of agglomerated iron powder.

## Claims

1. A reactive metal powder prepared by the electroexplosion of wires composed of the desired metal elements in a non-oxidising environment and characterized by high intrinsic energy and submicron particulate size.

2. A reactive metal powder as set forth in Claim 1 wherein said wire is 0.3mm to 1.0mm in diameter and wherein said electroexplosion comprises an electrical energy pulse of less than ten microseconds.

3. A reactive metal powder as set forth in Claim 1 wherein said nonoxidizing environment is one of gaseous hydrogen, helium, xenon or argon, or liquid argon or xenon.

4. A reactive metal powder as set forth in Claim 2 wherein said electroenergy is greater than the latent heat of vaporization and less than 10,000 Joules.

5. A process for bonding metal films to substrates comprising dispersing a reactive metal powder prepared by the electroexplosion of elemental metal as a film onto a substrate, and heating said substrate to an activation temperature of said powder to react said powder and cover the substrate with a conducting film.

6. The process as set forth in Claim 5 wherein said bonding is achieved by a local heat source to effect a decorative design or pattern.

7. A reactive metal powder as set forth in Claim 1 wherein said powder is dispersed in pyrotechnics or propellants.

8. A composition of matter consisting of a metal as set forth in Claims 1, 2, 3 and 4 and an inert element.

9. The composition of matter according to claim 8 wherein said inert element is one selected from a group consisting of Ar, Xe and He.

10. The composition of matter according to claims 8 and 9 wherein said metal is an alkali metal.

11. The composition of matter according to claim 8 wherein said metal is one selected from a group consisting of transition metals, Group 4B metals, Group 5-B metals, Group 6B metals, and Group 8B transition metals.

12. The composition of matter according to claim 8 wherein said metal is one selected from a group consisting of transition metals, group 4B metals or group 3A metals and said inert element is argon.

13. A reactive metal powder as set forth in Claims 1, 2, 3 and 4 wherein said powder is a metallurgical alloy additive to accelerate alloy formation.

14. A reactive metal powder as set forth in Claims 1, 2, 3 and 4 wherein said powder is used to join two metals at low temperature.

15. A reactive metal powder as set forth in Claims 1, 2, 3 and 4 wherein said powder is dispersed in a liquid medium to form a paste.

16. A reactive metal powder as set forth in Claims 1, 2, 3 and 4 wherein said powder is used to make bimetallic and multilayer powder metallurgical compacts.

17. The process as set forth in Claim 6 wherein said design or pattern is a metallic conductor.

18. The process as set forth in anyone of claims 5, 6 and 17 wherein said substrate is one of a metal, plastic, ceramic or glass.

19. The process as set forth in Claim 6 wherein said local heat sources are selected from electron or electromagnetic radiation.
